# EUROPEAN PATENT APPLICATION

(11) **EP 4 844 013 A1**
(43) Date of publication of application: **25.11.2026**
(21) Application number: 25177302.4
(22) Date of filing: 19.05.2025
(51) Int. Cl.: C08G 63/183, C08G 63/85

(54) **IMPROVED CATALYST COMPOSITION FOR A POLYESTER MANUFACTURING PROCESS**

(71) Applicant: CLARIANT INTERNATIONAL LTD, 4132 Muttenz (CH)
(72) Inventor: Steffanut, Pascal, 68730 Michelbach le bas (FR); Sidqi, Mohamed, 68350 Brunstatt (FR)
(74) Representative: Zusammenschluss Clariant

(57) **Abstract**

The present invention relates to catalyst composition for a polyester manufacturing process, comprising a titanium chelate catalyst as main catalyst, and
(i) at least one co-catalyst A, and
(ii) preferably at least one co-catalyst B

wherein co-catalyst A is a phosphonite, and
co-catalyst B is selected from the group consisting of (a) a metal salt of an alkyl or an aryl phosphinic acid, or (b) a metal salt of an alkyl or aryl diphosphinic acid, or (c) a combination thereof, and
wherein the titanium chelate catalyst is a titanium complex with β-hydroxy carboxylic acid ligands.

## Description

The present invention relates to an improved catalyst composition for a polyester manufacturing process.

Polyesters such as, for example, polyethylene terephthalate, polytrimethylene terephthalate and polybutylene terephthalate, are a class of important industrial polymers, used in large quantities in the manufacture of textile fibres, packaging films and containers.

Polyesters are usually prepared industrially in a two-stage catalyzed process. The first stage is the esterification reaction between at least one dicarboxylic acid and at least one polyol. In a second stage said esterification reaction is followed by a polycondensation step at higher temperatures resulting in the final polyester formation.

Numerous compounds have been proposed as esterification, transesterification or polycondensation catalysts. Antimony and titanium complexes, preferably in the form of alcoholic solutions, are the most frequently used catalysts in the polyester process. However, in some cases, certain drawbacks in reactivity, stability and appearance of the final product occur.

US 2009/0005531 discloses a method for increasing the solid-state polymerization rates of organic titanate catalyzed polyester. The method comprises in a first step, reacting a dicarboxylic acid or a C₁-C₃ dicarboxylic diester with a diol at a suitable temperature and pressure to effect esterification or transesterification to prepare a pre-condensate. In a second step the pre-condensate is reacted to effect polycondensation at a suitable temperature and pressure to prepare a high molecular weight polyester. In a third step, the molecular weight and viscosity of the polyester is increased further. The presence of phosphinic acid compounds provide for higher molecular weight build up, or viscosity increase during the solid state polymerization step. However, the reaction speed and the color improvement of said catalyst composition is not satisfying.

WO 2005/097321 discloses a composition comprising a titanium compound, a phosphite ester, and optionally a solvent for producing polyesters. However, these catalyst combinations show average activities. As an example, the phosphites, in spite of a good effect on the coloration of the final material, may even slow down the activity of the catalyst they are added to.

WO 2016/045923 describes a catalyst composition for polyester manufacturing that comprises a titanium and/or antimony catalyst as main catalyst and (i) a Co-catalyst A which is a metal salts of alkyl/aryl phosphinic acid or (ii) diphosphinic acid, or a combination of a co-catalyst B which is alkyl/aryl phosphinic acid or diphosphinic acid and a co-catalyst C which is metal salts, metal hydroxides or metal organic compounds or (iii) a combination of all three co-catalyst A and B and C. The combination of the Co-catalyst B and C is a precursor of co-catalyst A. Therefore, this document describes combinations of Ti catalysts and co catalysts which are metal salts of alkyl/aryl phosphinic acids.

WO 2022258518 relates to the use of novel anionic titanium based citric acids complexed to organic or metallic cations as new catalysts for the polyester manufacturing processes. No co-catalyst was used for the polymerization.

The problem of the present invention is to provide a catalyst composition which produces a polyester product with a very bright color (very light yellow or nearly white color) and which is more efficient than the known catalytic systems. It is also a problem of the present invention to further reduce the full reaction time to a minimum, while maintaining a bright color.

This problem was solved with a synergistic composition of a certain titanium chelate complex and a phosphonite co-catalyst.

The reaction speed and efficiency of the full polymerization was surprisingly further reduced by introducing another cocatalyst which synergistically optimizes the reaction time and coloration.

Surprisingly, it was found a catalyst composition for a polyester manufacturing process, comprising a titanium chelate catalyst as main catalyst, and
(i) at least one co-catalyst A, and
(ii) preferably at least one co-catalyst B

wherein co-catalyst A is a phosphonite, and co-catalyst B is selected from the group consisting of (a) a metal salt of an alkyl or an aryl phosphinic acid, or (b) a metal salt of an alkyl or aryl diphosphinic acid, or (c) a combination thereof, and
wherein the titanium chelate catalyst is a titanium complex with β-hydroxy carboxylic acid ligands
results in a final polyester product having an extremely light coloration.

The catalyst composition comprises a titanium catalyst as main catalyst, and at least one co-catalyst A, preferably one or two co-catalysts A.

In a preferred embodiment co-catalyst A is a diphosphonite, preferably a 4,4'-biphenylene-diphosphonite, particularly preferably a phosphonite of the formula (I)

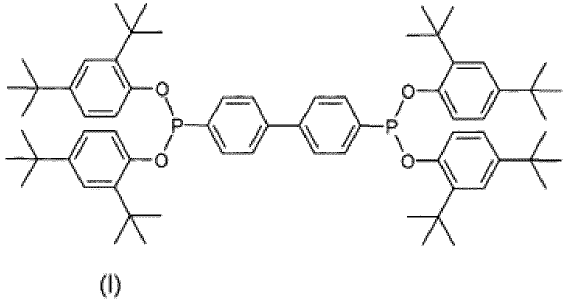

The phosphonite of the formula (I) is commercially available under the brand name Hostanox^{®} P-EPQ. This product is a mixture of reaction products of phosphorous trichloride with 1,1'-biphenyl and 2,4-bis(1,1 dimethylethyl)phenol and generally represented by the phosphonite of formula (I).

Preferably the main catalyst is a Titanium chelate complex wherein the β-hydroxy carboxylic acid ligands are selected from the group consisting of lactic acid, malic acid, tartaric acid and citric acid and/or combinations thereof.

More preferably the catalyst composition is characterized in that the titanium complex catalyst is a complex of the following formulae (II) or (III) 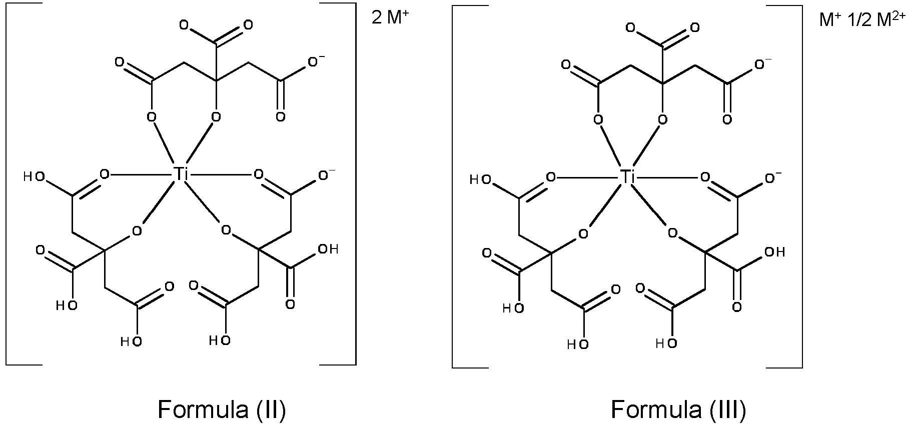 wherein M is one or more cationic counter ions selected from the group consisting of ammonium, its derivatives and metallic cationic counter ions.

Good results for coloration and reaction time can be achieved if the cationic counter ion M is selected from ammonium and its derivatives, Li, Na, Mg, K, Ca, Zn, Co and combinations thereof, preferably if it is selected from Na, K, Mg, Zn and compounds of the formula (IV) 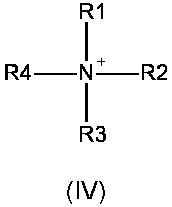
and combinations thereof,
wherein R1, R2, R3, R4 independently from each other denote H, C₁-C₁₂-alkyl, C₆-C₁₈-aryl, C₇-C₁₈-arylalkyl or C₇-C₁₈-alkylaryl.

The best results were achieved when the cationic counter ion M was selected from NH₄⁺, Zn, Mg and combinations of NH₄⁺ and Zn or NH₄⁺ and Mg.

The main catalyst of such a catalyst composition is a titanium chelate catalyst, but it is also possible that the catalyst composition comprises a combination of a titanium chelate catalyst and an antimony catalyst.

In a preferred embodiment of the invention, such a catalyst composition can additionally comprise at least one co-catalyst B, which is selected from the group consisting of a metal salt of an alkyl or an aryl phosphinic acid, or a metal salt of an alkyl or aryl diphosphinic acid, or a combination thereof. If the co-catalyst B is present, the polyester manufacturing process will be extremely efficient in terms of the polycondensation time, which results in a further reaction time improvement.

Preferably, co-catalyst B is selected from the group of the compounds of formula (V) and (VI) 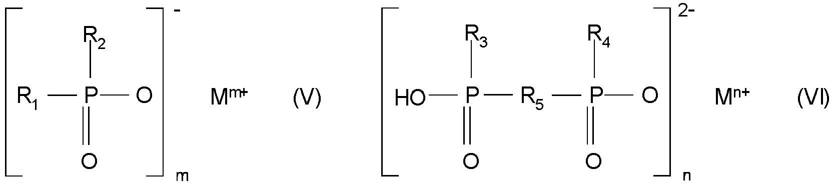 wherein
- R₁, R₂, R₃ and R₄: are independently from each other linear or branched, saturated or unsaturated C₁ to C₆ alkyl and/or aryl residues and may be the same or different from each other, and
- R₅: is a linear or branched, saturated or unsaturated C₁ to C₁₂ alkylene, C₆ to C₁₈ arylene, C₆ to C₁₈ alkyl arylene or C₆ to C₁₈ arylalkylene,
- M: is selected from the group consisting of aluminum, cobalt and zinc ions,
- m: is 2, 3 or 4, and
- n: is 1 or 2.

Most preferably in compounds of formula (V) R₁ and R₂ are a linear or branched C₁ to C₆ alkyl or a phenyl, and R₁ and R₂ may be the same or different from each other. Ideally, R₁ and R₂ are independently from each other selected from the group consisting of methyl, ethyl, n-propyl, isopropyl, n-butyl, n-pentyl and phenyl.

Examples of particularly preferred metal phosphinates of formula (V) are zinc dimethylphosphinate, zinc diethylphosphinate, dipropylphosphinate, zinc diisopropylphosphinate, zinc dibutylphosphinate, zinc dipentylphosphinate, zinc diphenylphosphinate, zinc ethyl methylphosphinate, zinc n-propyl methylphosphinate, zinc isopropyl methylphosphinate, zinc n-butyl methylphosphinate, zinc n-pentyl methylphosphinate, zinc phenyl methylphosphinate, zinc n-propyl ethylphosphinate, zinc isopropyl ethylphosphinate, zinc n-butyl ethylphosphinate, zinc n-pentyl ethylphosphinate, zinc phenyl ethylphosphinate, zinc isopropyl propylphosphinate, zinc n-butyl propylphosphinate, zinc n-pentyl propylphosphinate, zinc phenyl propylphosphinate, zinc n-butyl isopropylphosphinate, zinc n-pentyl iso-propylphosphinate, zinc phenyl isopropylphosphinate, zinc n-pentyl butylphosphinate, zinc phenyl butylphosphinate, zinc phenyl pentylphosphinate, cobalt dimethylphosphinate, cobalt diethylphosphinate, dipropylphosphinate, cobalt diisopropylphosphinate, cobalt dibutylphosphinate, cobalt dipentylphosphinate, cobalt diphenylphosphinate, cobalt ethyl methylphosphinate, cobalt n-propyl methylphosphinate, cobalt isopropyl methylphosphinate, cobalt n-butyl methylphosphinate, cobalt n-pentyl methylphosphinate, cobalt phenyl methylphosphinate, cobalt n-propyl ethylphosphinate, cobalt isopropyl ethylphosphinate, cobalt n-butyl ethylphosphinate, cobalt n-pentyl ethylphosphinate, cobalt phenyl ethylphosphinate, cobalt isopropyl propylphosphinate, cobalt n-butyl propylphosphinate, cobalt n-pentyl propylphosphinate, cobalt phenyl propylphosphinate, cobalt n-butyl isopropylphosphinate, cobalt n-pentyl isopropylphosphinate, cobalt phenyl isopropylphosphinate, cobalt n-pentyl butylphosphinate, cobalt phenyl butylphosphinate, cobalt phenyl pentylphosphinate, aluminum dimethylphosphinate, aluminum diethylphosphinate, dipropylphosphinate, aluminum diisopropylphosphinate, aluminum dibutylphosphinate, aluminum dipentylphosphinate, aluminum diphenylphosphinate, aluminum ethyl methylphosphinate, aluminum n-propyl methylphosphinate, aluminum isopropyl methylphosphinate, aluminum n-butyl methylphosphinate, aluminum n-pentyl methylphosphinate, aluminum phenyl methylphosphinate, aluminum n-propyl ethylphosphinate, aluminum isopropyl ethylphosphinate, aluminum n-butyl ethylphosphinate, aluminum n-pentyl ethylphosphinate, aluminum phenyl ethylphosphinate, aluminum isopropyl propylphosphinate, aluminum n-butyl propylphosphinate, aluminum n-pentyl propylphosphinate, aluminum phenyl propylphosphinate, aluminum n-butyl isopropylphosphinate, aluminum n-pentyl isopropylphosphinate, aluminum phenyl isopropylphosphinate, aluminum n-pentyl butylphosphinate, aluminum phenyl butylphosphinate, and aluminum phenyl pentylphosphinate. Most preferred are aluminum diethylphosphinate and/or zinc diethylphosphinate.

In another preferred embodiment the catalyst composition according to the present invention comprises a metal salt of a diphosphinic acid of formula (VI) as co-catalyst B, wherein R₃, R₄, and R₅, M and n are defined as mentioned above. Most preferably, R₃ and R₄ are a linear or branched C₁ to C₆ alkyl or a phenyl, and R₃ and R₄ may be the same or different from each other. Preferably, R₃ and R₄ are independently from each other selected from the group of methyl, ethyl, n-propyl, isopropyl, n-butyl, n-pentyl and phenyl. Most preferably R₅ is selected from the group of methylene, ethylene, n-propylene, isopropylene, n-butylene, n-pentylene, n-octylene, n-dodecylne, phenylene, naphtylene, methylphenylene, ethylphenylene, tert-butylphenylene, methylnaphtylene, ethylnaphtylene, tert-butylnaphtylene, phenylmethylene, phenylethylene, phenylpropynes and phenylbutylene. Each individual combination of R₃, R₄ and R₅ of the compound of formula (VI) is part of the present invention and the compound may also be a corresponding aluminum salt, a corresponding cobalt salt or a corresponding zinc salt.

Examples of particularly preferred metal salts diphosphinic acids of formula (VI) are zinc ethylene-1,2-bis(ethylphosphinate), zinc 1-methylethylene-1,2-bis(cyclohexylphosponate), zinc phenylene-1,2-bis(ethylphosphinate), zinc methylphenylene-1,2-bis(ethylphosponate), cobalt ethylene-1,2-bis(ethylphosphinate), cobalt 1-methylethylene-1,2-bis(cyclohexylphosponate), cobalt phenylene-1,2-bis(ethylphosphinate), cobalt methylphenylene-1,2-bis(ethylphosphinate), aluminum ethylene-1,2-bis(ethylphosphinate), aluminum 1-methylethylene-1,2-bis(cyclohexylphosphinate), aluminum phenylene-1,2-bis(ethylphosphinate), and aluminum methylphenylene-1,2-bis(ethylphosphinate).

Optionally, the catalyst composition may additionally comprise a solvent D. Solvent D is preferably selected from the group consisting of monovalent, divalent and polyvalent alcohols. Preferably solvent D is selected from the group consisting of ethanol, propanol, isopropanol, butanol, preferably n-butanol, ethylene glycol, propylene glycol, isopropylene glycol, butylene glycol, 1-methyl propylene glycol, pentylene glycol, diethylene glycol, triethylene glycol, 2-ethyl hexanol, cyclohexanedimethanol (CHDM) and combinations thereof. Most preferably co-catalyst D is selected from the group of isopropanol, n-butanol and ethylene glycol or a mixture thereof. In the catalyst composition one or more solvents D may be present. However, preferably only one solvent D is present, since this increases the stability of the catalyst composition. If the catalyst composition according to the present invention comprises solvent D it is easy to handle and allows a liquid dosing.

Although it is possible to introduce the different catalytic ingredients of the catalyst composition successively into the polymerization vessel, the catalyst composition is preferably prepared before adding it to the polymerization vessel. Such a catalyst composition can be produced by mixing the individual components together. In addition, it is also possible that co-catalyst A and co-catalyst B are mixed together before adding said mixture to the main catalyst.

The catalyst composition can also be produced in addition to water, in a second solvent which is compatible with or does not interfere with an esterification or transesterification or polycondensation reaction.

So, in an alternative embodiment, the catalyst composition comprises the main catalyst and
(i) at least one co-catalyst A, and
(ii) preferably at least one co-catalyst B, and;
(iii) a solvent D.

This is in absence of a carboxylic compound, which is a starting compound of the polymerization reaction. Such a catalyst composition is ready for use and has excellent shelf stability. In a preferred embodiment the catalyst composition is solved in the alcohol which is a starting compound of the reaction, such as ethylene glycol for producing PET, 1,4-butanediol for producing polybutylene terephthalate or 1,3-propylene glycol for producing polypropylene terephthalate.

The mixing of
(a) the main catalyst and the co-catalyst A, or of
(b) the main catalyst, co-catalyst A and co-catalyst B, and
optionally of solvent D and optionally of other optional ingredients can be carried out under an inert atmosphere, such as nitrogen, carbon dioxide, helium or a combination thereof. While being produced, the mixture can be stirred and can be carried out at a temperature in the range of from 0 to 100 °C, preferably 20 to 50°C. Generally, the catalyst composition can comprise any amount of solvent, as long all the amounts can substantially dissolve the composition.

The quantities of the main catalyst and co-catalyst A can be such that the molar ratio of the co-catalyst A to main catalyst in the catalyst composition is as follows:
Co-catalyst A : main catalyst is in the range of 0.1:1 to 50:1, preferably of 0.1:1 to 10:1, and most preferably from 1:1 to 4:1.

The quantities of the main catalyst and co-catalyst B can be such that the molar ratio of the co-catalyst B to main catalyst in the catalyst composition is as follows:
Co-catalyst B: main catalyst is in the range of 0.1:1 to 50:1, preferably of 0.1:1 to 10:1, and most preferably from 1:1 to 4:1.

If a solvent D is present in the catalyst composition according to the present invention it may contain more than 50 wt% of solvent D, related to the total catalyst composition including solvent D, preferably more than 80 wt% of solvent D, more preferably more than90 wt% of solvent D, most preferably about 95 wt% of solvent D.

The inventive catalyst composition can be applied in processes to produce polyesters. Polyesters are obtained from their monomers in a two-step process starting with direct esterification followed by polycondensation. Polymers of one polymer type can be obtained from the same main monomers. Polymers of one polymer type can also be obtained from several main monomers. The individual monomers can be arranged alternately, randomly or in blocks. A limited quantity of further monomers, so-called co-monomers, can also be used. Monomers can be obtained from fossil fuels, such as crude oil, natural gas or coal or from renewable raw materials. Monomers can also be obtained by depolymerization or pyrolysis from existing polymers, in particular recycled polyester polymers.

Polycondensates are obtained by a polycondensation reaction with the elimination of a low-molecular reaction product, usually water or methanol. The polycondensation can take place directly between the monomers. The polycondensation can also take place via an intermediate product, which is then converted by trans-esterification, wherein the trans-esterification can again take place with elimination of a low-molecular reaction product or by ring-opening polymerization. The polycondensate obtained in this way is essentially linear, although a small number of branches may occur.

Therefore, the present invention also discloses a method for the preparation of a polyester or a recycled polyester in the presence of the catalyst composition comprising co-catalyst A and preferably co-catalyst B. The process comprises the steps of:
a) esterifying (i) a carboxy compound preferably selected from the group consisting of dicarboxylic acid with the general structure HOOC-R2-COOH, , a mono-ester thereof, a di-ester thereof (usually dimethyl ester) or a carboxylic acid metal salt and (ii) an alcohol selected from the group of a mono alcohol, a diol with the general structure HO-R1-OH or polyol by transesterification to obtain an esterified mixture (said reaction is called a direct esterification, DE). R1 and R2 are usually aliphatic hydrocarbons with 1 to 15 carbon atoms, aromatic hydrocarbons with 1 to 3 aromatic rings, cyclic hydrocarbons with 4 to 10 carbon atoms or heterocyclic hydrocarbons with 1 to 3 oxygen atoms and 3 to 10 carbon atoms. Linear or cyclic diol components and aromatic or heterocyclic dicarboxylic acid components are usually used. Furthermore, the reaction product of a dicarboxylic acid with two diols, which is present in the form of the structure HO-R1-OOC-R2-COO-R1-OH, can be used partially or completely instead of the dicarboxylic acid. An example of this is the use of bis(2-hydroxyethyl) terephthalate to produce polyethylene terephthalate.
b) polymerizing the esterified mixture at temperatures in the range of preferably 200°C to 330°C to obtain a polyester (said reaction is called polycondensation, PC).

The direct esterification is preferably carried out at a temperature in the range from 150 °C to 500 °C, preferably 200 °C to 400 °C, and most preferably 250 °C to 330°C under a pressure in the range of from 1 mbar to 8 bar, preferably from 10 mbar to 6 bar, particularly preferably from 30 mbar to 4 bar, most preferably from 40 mbar to 2 bar for a time period of from 0.2 to 20 hours, preferably 0.2 to 15 hours, and most preferably 0.5 to 10 hours. In another reactor setting the pressure range is from 200 mbar to 6 bar, preferably from 400 mbar to 4 bar, particularly preferably from 800 mbar to 4 bar. The molar ratio of the alcohol to carboxyl compound can be any ratio so long as the ratio can affect the production of an ester or polyester. Generally, the ratio can be in the range of from 1:1 to 10:1, or 1:1 to 5:1, or 1:1 to 4:1. The product of said direct esterification is a low molecular weight oligomer having a total of 1 to 100, preferably 2 to 10 repeating units derived from the carboxyl compound and the alcohol.

The polycondensation reaction is preferably carried out at a temperature in the range from 250 °C to 350 °C, preferably 250 °C to 300 °C, and most preferably 275 °C to 300 °C under a pressure in the range of from 0,1 mbar to 1 bar, preferably of less than 100 mbar, more preferably of less than 10 mbar and most preferably of less than 1 mbar for a time period of from 1 to 4 hours.

A carboxy compound as starting compound of the direct esterification reaction may be any carboxyl compound, which when combined with an alcohol, can produce an ester or polyester. Examples include, but are not limited to, acids, esters, amides, acid anhydrides, acid halides, salts of carboxylic acid oligomers or polymers having repeating units derived from an acid, or combinations of two or more thereof.

Preferably, the dicarboxylic acid used as starting material of the direct esterification has the formula of

HO₂C-A-CO₂H

in which A is selected from the group consisting of a saturated or unsaturated, linear or branched alkylene group, a substituted or unsubstituted arylene group, substituted or unsubstituted alkenylene group, or combinations of two or more thereof. A has 0 to 30, preferably 1 to 25, more preferably 4 to 20, most preferred 4 to 15 carbon atoms. Examples of suitable dicarboxylic acids include, but are not limited to, terephthalic acid, isophthalic acid, naphthalic acid, succinic acid, adipic acid, phthalic acid, glutaric acid, oxalic acid, maleic acid, furan dicarboxylic acid and combinations of two or more thereof.

In addition, monoacids may be used as potential chain termination agents in combination with the dicarboxylic acids such as acrylic acid or benzoic acid.

Preferably, the ester used as starting material of the direct esterification is selected from the group of the methyl esters of the dicarboxylic acids mentioned before. Examples of suitable esters include, but are not limited to, dimethyl adipate, dimethyl phthalate, dimethyl terephthalate, methyl benzoate, dimethyl glutarate, and combinations of two or more thereof.

Preferably, the carboxylic acid metal salts used as starting material of the direct esterification is a 5-sulfo-isophthalate metal salt and its ester having the formula of (R₁₁O₂C)₂-A-S(O)₂M₁ in which each R₁₁ can be the same or different and is hydrogen or an alkyl group containing 1 to 6, preferably 2, carbon atoms, A is a phenylene group and M1 can be an alkali metal ion such as sodium. An example of the ester is bis-glycolate ester of 5-sulfo isophthalate sodium salt.

The term polyol is intended to cover any suitable alcohol containing two or more hydroxyl groups known to those skilled in the art. Any alcohol that can esterify a dicarboxylic acid, a monoester thereof, a di-ester thereof or a carboxylic acid metal salt to produce a polyester can be used in the present invention. Examples of suitable alcohols include, but are not limited to ethanol, propanol, isopropanol, butanol, ethylene glycol, propylene glycol, isopropylene glycol, butylene glycol, Hexane-1,6-diol, Octane-1,8-diol, 1,10-Decanediol, 1-methyl propylene glycol, Propane-1,2,3-triol, 2,2-Dimethyl-1,3-propanediol, pentylene glycol, diethylene glycol, triethylene glycol, 2-ethyl hexanol,1,6-hexanediol, cyclohexyl-1,4-bismethanol, 2,2,4,4-Tetramethylcyclobutane-1,3-diol, D-sorbitol, Dianhydrohexitols like Isosorbide, Isoidide, Isomannide and combinations of two or more thereof, whereby monoalcohols may be used as potential chain termination agents in combination with di-acids.

Typical examples of polyesters, to be produced with the catalyst according to the invention, wherein the invention can be applied, are polyethylene terephthalate (PET), glycol-modified PET (PETG, PCT), polybutylene terephthalate (PBT), co-PBT (PBAT, PBST), polytrimethylene terephthalate (PTT), polyethylene furanoate (PEF), poly trimethylene-furanoate (PTF), polybutylene succinate (PBS) and polyethylene naphthalate (PEN), which are used either as homopolymers or as copolymers.

The suitable polyesters may be homopolymers. Despite the term homopolymer, a small proportion of comonomers can be added during the manufacturing process. For example, the formation of diethylene glycol from ethylene glycol is known to occur in the production of polyethylene terephthalate. However, many suitable polyesters are copolymers that contain a certain proportion of comonomers. The comonomers may be introduced as part of the monomers in the manufacturing process of the polyester, or they may form as part of the manufacturing process, usually resulting in a random distribution in the final polyester. The comonomers can also be introduced as blocks made from different monomers, resulting in so-called block copolymers. The suitable polyesters can be polymer mixtures, which can contain any number and quantity of different types of polyester. A small amount of one polyester can act as a nucleating agent in other polyesters, thereby increasing their crystallization rate. Specific polyester mixtures can form interacting crystal structures with a crystallization behaviour that differs from the individual components.

After polymerization, each polymer chain has chain-terminating groups usually with the functionality of at least one of its monomers. As an example, a polyester chain may have one or more hydroxyl and/or carboxyl end groups. Such end groups may be modified by a so-called end-capping reagent or by a degradation reaction. Although not specifically mentioned in the above general structures, suitable polyesters may have such modified end groups.

The polyesters, to be produced with the catalyst according to the invention can be obtained from virgin raw materials (virgin polyesters) or from polyester recyclates (often called oligomers if obtained by partial depolymerisation). A virgin polyester material is a polyester that is made from its monomers, where the monomers can be derived from petroleum-based sources, from biologically renewable raw materials or from the depolymerization of polyester articles or waste, where monomers can also include dimers and lower oligomers with a chain length of up to 9 repeating units of the polyester. The polyester is not considered virgin material if it falls under the definition of a recyclate. Recycled polyesters from the manufacturing and processing operations (post-industrial) or polyesters collected and recycled after consumer use (post -consumer) are referred to as recyclates.

A polyester recyclate to be produced according to the invention preferably still has a chain length of at least 10 (preferably 20, most preferably in between 30 or 40) repeating units of the polyester. Recycled polyesters can preferably consist of consumer waste, for example used polyester articles. Typical examples of such articles are polyester bottles, polyester trays or polyester fibres.

The catalyst composition of the present invention, that is,
(i) sum of the main catalyst and co-catalyst A, and
(ii) optionally co-catalyst B,
can be present in the range of 0.0001 to 50,000 ppm by weight, preferably 0.001 to 10,000 ppm by weight, or 0.001 to 1000 ppm by weight relative to the carboxy compound.

It was found that the co-catalyst A significantly lightens the polyester product. The synergistic combination of the main catalyst and Co-catalysts A and B significantly accelerates the direct esterification step as well as the polycondensation step of the polyester production and simultaneously lightens the polyester product. Therefore, the main catalyst, co-catalyst A and preferably co-catalyst B are added during the direct esterification step so that the main catalyst and the co-catalyst B are present in both production steps, that is during the direct esterification and during the polycondensation step.

Other ingredients such as conventional esterification and trans-esterification catalysts (e.g., manganese) and those enhancing catalyst stability or performance may be introduced to the production process concurrent with, or following, introduction of the catalyst composition of the present invention.

It is possible to add additives during the polymerization reaction such as processing stabilizers, flame retardant additives, antioxidants, UV absorbers, light stabilizers, metal deactivators, peroxide-destroying compounds, stabilization, nucleating agents or other additives. Preferably, in particular an antioxidant selected from the group consisting of a phosphite or other phosphorous based antioxidants may be added. Said phosphite or other phosphorous based antioxidants can, for example, be triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert- butyl-4-methylphenyl) pentaerythritol diphosphite, bisisodecyloxy pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, , 6-iso-octyloxy-2,4,8,10-tetra-tert-butyl-12H-dibenzo[d,g]-1,3,2-dioxaphosphocin, 6-fluoro-2,4,8,10-tetra-tert-butyl-12-methyl-dibenzo[d,g]-1,3,2-dioxaphosphocin, bis(2,4-di-tert-butyl-6-methylphenyl) methyl phosphite, bis(2,4-di-tert-butyl-6- methylphenyl) ethyl phosphite, tris(2-tert-butyl-4-thio(2'-methyl-4,-hydroxy-5'-tert- butyl)phenyl-5-methyl) phenyl phosphite, 2,2',2"-nitrilo[triethyl tris(3,3',5,5'-tetra- tert-butyl-1,1'-biphenyl-2,2'-diyl) phosphite] and/or bis[2-methyl-4,6-bis(1 ,1-dimethylethyl)phenol]phosphorous acid ethyl ester.

### Experimental part

Reaction conditions and analytical evaluation of the polyesters:
The polycondensation progress is controlled by measuring of differential torque value (ΔC) of the mixing device. This parameter depends on the viscosity change of reaction mixture. For every PET synthesized, ΔC is set to 15 Nm as a typical value for PET with a reduced viscosity between 70-78 mL/g. Once this value is attained, the reactor is opened and the polymer collected. The time of beginning of polycondensation (t0=0 min) is taken when the reactor pressure reaches 20 mbar.

The quality and performance of the polyesters produced with the inventive catalyst composition was evaluated by determining the color and intrinsic viscosity of the polyesters.

The color was measured with a Minolta spectrophotometer in reflectance mode according to CIE 1964 / Observer 10 degree / Illuminant D 65. About 40g of PET granules were measured in a glass cuvette. Two measurements were taken and averaged.

The intrinsic viscosity was measured with capillary viscosimetry analysis (method ASTM D4603).

This technique allows the measurement of the intrinsic viscosity of PET in solution from the study of the flow time of pure solvent (t0) and of polymer solution (t). Different data characterizing the polymer viscosity can be calculated by this method: $Relative viscosity \to ηrel = t / t 0$ $Specific viscosity \to ηsp = \left(t-t0\right) / t 0$ $Reduced viscosity \to ηred = \left(t-t0\right) / C * t 0$

In the literature, people skilled in the art have managed to establish a model to deduce directly from these expressions of viscosity: the intrinsic viscosity ([η]), number average molar mass and weight average molar mass (Mn, Mw) and the average degrees of polymerization DPn. We used two models for PET on the range of reduced viscosity: 5 ml/g< ηred <100 mL/g. One model to calculation for intrinsic viscosity is: $\left[η\right] = \frac{\sqrt{2 \times \left({η}_{sp}-Ln {η}_{rel}\right)}}{C}$

If it does not deviate by more than 0,02 % from the typically achieved values, the polyester has achieved the necessary quality, what is indicated with a "+". This was the case for all PET's which were produced with the inventive or comparative catalyst compositions as shown Table 2 in the experimental part.

### Experimental results

The synthesis takes place in a 10 l reactor for each run (batch), all PETs are synthesized from terephthalic acid (TA) and ethylene glycol (EG) monomers that are used in the PET industry. The Titanium-based catalysts, the phosphonite additives and reaction speed enhancing metal salts of (di)phosphonic acids were used in the polymerization of PET. All products, their chemical structure, properties and quantity were determined by appropriate analytical methods.

### Catalyst mixture preparation

The catalyst composition components (1), (2), preferably (3) and optionally (4) can be added separately during the polymerization process or ready-to-use mixtures can be prepared in advance by mixing the constituents following a given ratio in a solvent. This solution is then introduced to the process in the direct esterification or the polycondensation steps.

Typical quantities used per batch in polymerization for each individual component (Monomers (M) and catalysis formulations)

**Table 1: Substances used for PET polymerization process**

| Type | Products | Producer | Amount used per batch |
|---|---|---|---|
| M | Terephthalic acid | Sigma-Aldrich | 16 mol. |
| M | Ethylene glycol | Sigma-Aldrich | 19.2 mol. |
| 1 | Tetrabutyl titanate (Ti(OBu)₄ | Sigma-Aldrich | 7 ppm Ti |
| 1 | AC -422 | Dorf ketal | 7 ppm Ti |
| 1 | PC-64 | Dorf ketal | 7 ppm Ti |
| 1 | [Ti(Cit)3(NH4)]2Zn | Clariant | 7 ppm Ti |
| 1 | [Ti(Cit)3K]2Zn | Clariant | 7 ppm Ti |
| | | | |
| 2 | Hostanox^{®} P-EPQ^{®}: tetrakis(2,4-di-tert-butylphenyl) 4,4'-biphenylene-diphosphonite (P(III)-species) | Clariant | 5 ppm P |
| 2 | DiPOS: Ethylen-1,2-bis(ethylphosphinic acid) (P(V)-species, phosphinate) | Clariant | 5 ppm P |
| 3 | Zinc (II) acetate | Sigma-Aldrich | 50 ppm Zn |
| 3 | Hostamax^{®} ZP: Zinc (II) diethylphosphinate (Zn(DEP)2) | Clariant | 50 ppm Zn |
| 4 | Ethylene glycol | Sigma-Aldrich | |

### Example of a ready-to-use catalyst mixture preparation:

In a typical titanium chelate catalyst preparation, 2.54 grams of [Ti(Cit)3(M+)]2M2+, 1.78 grams of Hostanox^{®} P-EPQ^{®} and 4.69 grams of Hostamax^{®} ZP are diluted or dispersed into 50 ml of ethylene glycol. The solution is stirred for 90 minutes at room temperature and used as catalyst for example 1 (Table 1).

An equivalent formulation is stored for one additional week and evaluated in another polymerization trial. The aged solution is shown to perform similarly to the freshly prepared one.

### Direct esterification step

Terephthalic acid (AT) is esterified with ethylene glycol (EG) under a nitrogen pressure of 6.6 bar and a temperature of 275°C. The molar ratio EG/AT is equal to 1,2. The catalysts and the cocatalysts or the ready-to-use mixture in ethylene glycol are introduced by an adapted device to the reactor in the amounts as shown in Table 2. The agitator was turned on and the temperature increased to 275 °C over a period of about 2.5 hours. The contents were esterified by holding under agitation at 275 °C and a pressure of 160 mbar, and at 280 °C and a pressure of 40 mbar.

The progress of the reaction is controlled by the amount of water recovered named the "conversion". When the direct esterification step was completed (no water distilled off), the polycondensation step is started.

### Polycondensation step

The polycondensation step consists of coupling the PET oligomers formed during the esterification step, by transesterification reactions (also referred as exchange reactions) to alcohol-ester which lead to release the excess of ethylene glycol molecules. The reaction takes place at 285 °C under reduced pressure of 0.7 mbar. The contents of the kettle were held under agitation at 285 °C at 1 to 2 mm Hg pressure (1.33 to 2.66 mbar) for a time sufficient to reach 15 ounce-inch (0.106 Newton-meter) torque as measured by an Electro-Craft Motomatic torque controller. The time for this step was recorded as the Finish Time and varied with the catalyst system used. The polymer melt was then poured into a water bath to solidify the melt, and the resultant solid annealed at 0 °C for 12 hours and ground to pass through a 2 mm filter for color measurements using a spectrophotometer.

### Results:

**Table 2 Polymerisation results with titanium-based catalysts: Evaluation of reaction time and color of the resulting PET**

| Abbreviations - IS: introduction step of the ingredients. IS 1: preceding catalyst composition component(s) introduced at DE step. | | | | | | | | | | | | | | | | |
|---|---|---|---|---|---|---|---|---|---|---|---|---|---|---|---|---|
| IS 2: preceding catalyst composition component introduced at PC step. DE: direct esterification time [min]. PC: polycondensation time [min]. Sum: sum of DE + PC | | | | | | | | | | | | | | | | |
| ZP: Hostamax ZP; P-EPQ: Hostanox P-EPQ | | | | | | | | | | | | | | | | |
| Inv: inventive examples; Com: comparative examples | | | | | | | | | | | | | | | | |
| Ex | Catalyst | Ti (ppm) | Co-Cat 1 | P (ppm) | IS | Co-cat 2 | Zn (ppm) | IS | DE [min] | PC [min] | Sum | L* | a* | b* | chips colour | [η] * |
| Inv 1 | [Ti(Cit)3(NH4)]2Zn | 7 | P-EPQ | 100 | 1 | ZP | 50 | 1 | 85 | 70 | 155 | 74.69 | -1.63 | 8.51 | very light yellow | + |
| Inv 2 | [Ti(Cit)3(NH4)]2Zn | 7 | P-EPQ | 100 | 1 | ZP | 50 | 2 | 85 | 65 | 150 | 76.31 | -1.42 | 7.27 | very light yellow | + |
| Inv 3 | [Ti(Cit)3(NH4)]2Zn | 7 | P-EPQ | 100 | 1 | | | 1 | 85 | 104 | 184 | 61 | -1.11 | 2.8 | nearly white | + |
| Com 1 | [Ti(Cit)3(NH4)]2Zn | 7 | | | 1 | ZP | 50 | 1 | 85 | 54 | 139 | 58.9 | -1.76 | 5.46 | very light yellow | + |
| Com 2 | [Ti(Cit)3(NH4)]2Zn | 7 | DiPOS | 5 | 1 | | | 1 | 90 | 91 | 181 | 75.61 | -2.68 | 12.02 | light yellow | + |
| Com 3 | [Ti(Cit)3(NH4)]2Zn | 7 | | | 1 | ZP | 50 | 1 | 85 | 57 | 142 | 72.59 | -2.41 | 13.43 | light yellow | + |
| Com 4 | [Ti(Cit)3(NH4)]2Zn | 7 | | | 2 | Zn(OAc) | 50 | 1 | 85 | 60 | 145 | 72.66 | -2.24 | 12.13 | light yellow | + |
| Com 5 | [Ti(Cit)3(NH4)]2Zn | 7 | - | - | 2 | - | - | - | 90 | 76 | 166 | 74.70 | -2.96 | 14.99 | light yellow | + |
| Com 6 | [Ti(Cit)3K]2Zn | 7 | - | - | 2 | - | - | - | 85 | 85 | 170 | 73.99 | -1.99 | 17.47 | Yellow | + |
| Com 7 | Ti(OBu)4 | 7 | P-EPQ | 100 | 1 | ZP | 50 | 1 | 85 | 79 | 164 | 74.8 | -3.3 | 17.36 | Yellow | + |
| Com 8 | Ti(OBu)4 | 7 | P-EPQ | 100 | 1 | ZP | 50 | 2 | 85 | 77 | 162 | 72.97 | -1.25 | 21.79 | Yellow | + |
| Com 9 | AC -422 | 7 | P-EPQ | 100 | 1 | ZP | 50 | 1 | 85 | 90 | 175 | 75.55 | -2.60 | 16,22 | Yellow | + |
| Com 10 | AC -422 | 7 | P-EPQ | 100 | 1 | ZP | 50 | 2 | 85 | 87 | 172 | 76.36 | -2.85 | 14.66 | light yellow | + |
| Com 11 | PC-64 | 7 | P-EPQ | 100 | 1 | ZP | 50 | 1 | 90 | 127 | 217 | 76.64 | -2.05 | 956 | very light yellow | + |
| Com 12 | PC-64 | 7 | P-EPQ | 100 | 1 | ZP | 50 | 2 | 90 | 125 | 215 | 77.54 | -1.74 | 8.76 | very light yellow | + |
| Com 13 | Ti(OBu)4 | 7 | none | 0 | 1 | ZP | 50 | - | 85 | 43 | 128 | | | | yellow | + |
| Com 14 | Ti(OBu)4 | 7 | P-EPQ | 100 | 1 | - | - | 1 | 90 | 113 | 203 | | | | yellow | + |

| | | | | | | | | | | | | | | | | |
|---|---|---|---|---|---|---|---|---|---|---|---|---|---|---|---|---|
| *"+"means that the intrinsic viscosity is in the expected range, "-" means that the quality is not sufficient. | | | | | | | | | | | | | | | | |

Performance and quality of the PET products from all examples were comparable to those from the-state-of-the-art. All PET grades were qualified to be used in polyester fibers. Inventive example 2 shows that the combination of the Titanium Chelate catalyst and the Hostanox^{®} P-EPQ^{®} produces PET that is of lighter color than the PETs which were produced with the Titanium chelate catalyst alone (comparative examples 5 and 6) or with a combination of a Tetrabutyl titanate and Hostanox^{®} P-EPQ^{®} (comparative example 14). It is also of much lighter color than combinations of state-of-the-art catalysts Tetrabutyltitanate, AC-422 and PC-64 with Hostanox^{®} P-EPQ^{®} and Hostamax^{®} ZP. The reaction time of the PET process, especially the polycondesation step can be significantly reduced by the synergistic combination of the Titanium chelate catalyst, the Hostanox^{®} P-EPQ and Hostamax^{®} ZP. Here [Ti(Cit)3(NH4)]2Zn is the best performing catalyst in this catalyst composition (inventive examples 1 and 2) as it combines a very light yellow color with a very short reaction time below 160 min under the described process conditions.

## Claims

1. Catalyst composition for a polyester manufacturing process, comprising a titanium chelate catalyst as main catalyst, and
(i) at least one co-catalyst A, and
(ii) preferably at least one co-catalyst B, and
wherein
co-catalyst A is a phosphonite, and
co-catalyst B is selected from the group consisting of
(a) a metal salt of an alkyl or an aryl phosphinic acid, or
(b) a metal salt of an alkyl or aryl diphosphinic acid, or
(c) a combination thereof, and
wherein the titanium chelate catalyst is a complex with β-hydroxy carboxylic acid ligands.

2. Catalyst composition according to claim 1, wherein cocatalyst A is diphosphonite, preferably a 4,4'-biphenylene-diphosphonite, particularly preferably a phosphonite of the formula (I)

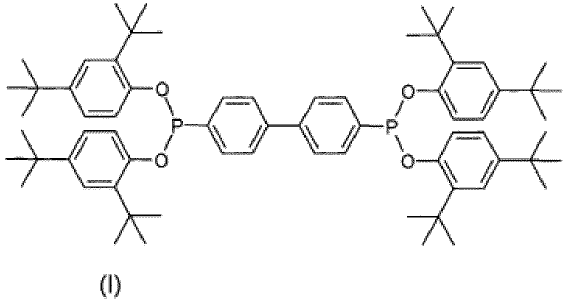

3. Catalyst composition according to claim 1 or 2, **characterized in that** the β-hydroxy carboxylic acid ligand is selected from the group consisting of lactic acid, malic acid, tartaric acid and citric acid or combinations thereof.

4. Catalyst composition according to one or more of the preceding claims,
**characterized in that** the titanium complex catalyst is a complex of the following formulae (II) or (III) 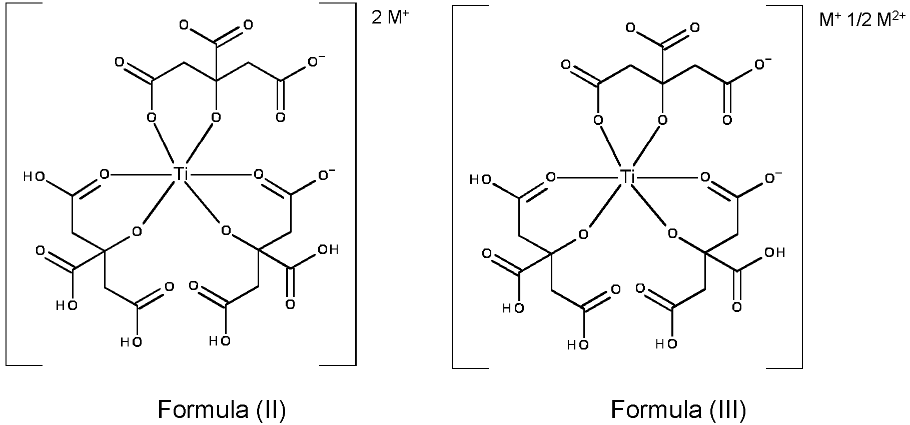 wherein M is selected from a metallic cationic counter ion or ammonia and its derivatives and combinations of thereof.

5. Catalyst composition according to claim 4, wherein the organic or metallic cationic counter ion M is selected from ammonia and its derivatives, Li, Na, Mg, K, Ca, Zn and Co.

6. Catalyst composition according to claim 5, wherein the organic or metallic cationic counter ion M is selected from Na, K, Mg, Zn and compounds of the formulae (III) 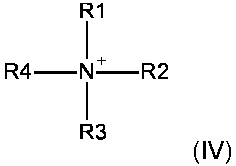
and combinations thereof,
wherein
R1, R2, R3, R4 independently from each other denote H, C₁-C₁₂-alkyl, C₆-C₁₈-aryl, C₇-C₁₈-arylalkyl or C₇-C₁₈-alkylaryl.

7. Catalyst composition according to one or more of the preceding claims, wherein co-catalyst B is selected from the group consisting of compounds of formula (V) and (VI) 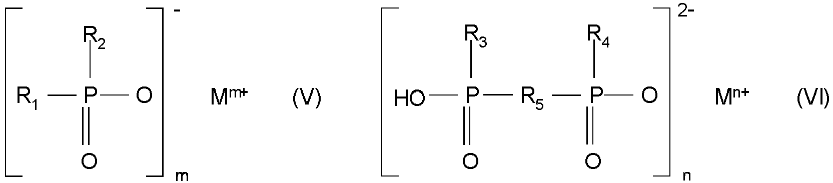 wherein
R₁, R₂, R₃ and R₄ are independently from each other linear or branched, saturated or unsaturated C₁ to C₆ alkyl and/or aryl residues and may be the same or different from each other, and
R₅ is C₁ to C₁₂ a linear or branched, saturated or unsaturated alkylene, C₆ to C₁₈ arylene, C₆ to C₁₈ alkyl arylene or C₆ to C₁₈ arylalkylene,
M is selected from the group consisting of aluminum, cobalt and zinc ions, preferably zinc ions,
m is 2, 3 or 4, and
n is 1 or 2.

8. Catalyst composition according to any of the preceding claims, wherein in the compounds of formula (V) and (VI) R₁, R₂, R₃ and R₄ are independently from each other linear or branched saturated or unsaturated C₁ to C₆ alkyl residues or phenyl and may be the same or different from each other.

9. Catalyst composition according to claim 8, wherein in the compounds of formula (V) and (VI) R₁, R₂, R₃ and R₄ are independently from each other selected from methyl, ethyl, n-propyl, isopropyl, n-butyl, tert-butyl, n-pentyl and/or phenyl.

10. Catalyst composition according to one or more of claims 7 to 9, wherein in the compounds of formula (VI) R₅ is selected from the group consisting of methylene, ethylene, n-propylene, isopropylene, n-butylene, tert-butylene, n-pentylene, n-octylene, n-dodecylene, phenylene, methylphenylene, ethylphenylene, tert-butylphenylene, methylnaphthylene, ethylnaphtylene, tert-butylnaphthylene, phenylmethylene, phenylethylene and phenylbutylene.

11. Catalyst composition according to any of the preceding claims, wherein co-catalyst B is zinc diethylphosphinate.

12. Catalyst composition according to any of the preceding claims, wherein in the composition comprises a solvent D selected from the group consisting of monovalent, divalent and polyvalent alcohols.

13. Catalyst composition according to claim 12, wherein solvent D is selected from the group consisting of ethanol, propanol, isopropanol, butanol, n-butanol, ethylene glycol, propylene glycol, isopropylene glycol, butylene glycol, 1-methyl propylene glycol, pentylene glycol, diethylene glycol, triethylene glycol, 2-ethyl hexanol and combinations thereof, preferably selected from the group consisting of n-butanol and ethylene glycol or a mixture thereof.

14. Use of a catalyst composition according to any of the preceding claims for the production of a polyester, preferably of polyethylene terephthalate.

15. Use according to claim 14, wherein the catalyst composition or the titanium chelate catalyst, the co-catalyst A and optionally the co-catalyst B are introduced separately or jointly initially or during the direct esterification or the polycondensation step.
